# FASCICULE DE BREVET EUROPEEN

(11) **EP 1 230 852 B1**
(45) Date de publication et mention de la délivrance du brevet: **07.11.2007**
(21) Numéro de dépôt: 02360053.9
(22) Date de dépôt: 04.02.2002
(51) Int. Cl.: A01M 7/00

(54) **Dispositif de sécurité d'une rampe de pulvérisation**
Sicherheitsystem für ein Spritzgestänge
Safety device for a spray boom

(30) Priorité: 09.02.2001 FR 0102044
(43) Date de publication de la demande: 14.08.2002
(73) Titulaire: KUHN S.A., 67700 Saverne (FR)
(72) Inventeur: Guesdon, Alain, 77123 Noisy sur Ecole (FR)
(74) Mandataire: Andres, Jean-Claude

(56) Documents cités:
- FR-A- 2 673 355
- GB-A- 2 107 162
- US-A- 2 564 041

## Description

La présente invention se rapporte au domaine technique général du machinisme agricole et plus particulièrement à une rampe selon le préambule de la revendication 1.

Le document FR 2 673 355 décrit une rampe de pulvérisation comportant un tronçon d'extrémité lié à un tronçon intermédiaire au moyen d'une articulation composée d'une rotule, d'un rail de guidage et d'ergots. Au contact d'un obstacle, une telle articulation permet avantageusement audit tronçon d'extrémité de s'effacer latéralement ou vers le haut. Une fois l'obstacle passé, ledit tronçon d'extrémité est ramené dans sa position initiale à l'aide d'un ressort de traction.

Ce dispositif de sécurité connu présente cependant un inconvénient. En effet lors du travail, la rampe subie des secousses dues, par exemple, aux bosses présentes sur le terrain à traiter. Pour conserver ledit tronçon d'extrémité dans sa position initiale, ledit ressort de traction doit donc exercer une force de maintien relativement importante.

De plus lors d'un contact avec un obstacle, le pivotement dudit tronçon d'extrémité par rapport audit tronçon intermédiaire a pour effet d'allonger ledit ressort de traction. La force de rappel ainsi créée s'ajoute à la force de maintien initiale. Une fois l'obstacle passé, le tronçon d'extrémité est donc violemment ramené dans sa position initiale. La rampe subit par conséquent des chocs préjudiciables à long terme.

Le but de la présente invention consiste à remédier à cet inconvénient de l'état de la technique.

A cet effet, la rampe de pulvérisation de la présente invention est caractérisée par le fait que le dispositif de maintien comporte au moins une mâchoire, dans la position initiale, un desdits ergots est en prise dans ladite mâchoire et qu'après déclenchement, le retour de ladite rampe dans sa position initiale est dû uniquement au poids dudit tronçon d'extrémité.

D'autres caractéristiques de l'invention, à considérer séparément ou dans toutes leurs combinaisons possibles, apparaîtront encore dans la description suivante d'un exemple de réalisation non limitatif de l'invention représenté sur les dessins annexés sur lesquels :
- la **figure 1** représente partiellement une rampe conforme à la présente invention,
- la **figure 2** représente, vue suivant la flèche II définie sur la figure 1 et à une autre échelle, la rampe de la figure 1 en position initiale,
- la **figure 3** représente la rampe de la figure 2 en position pivotée.

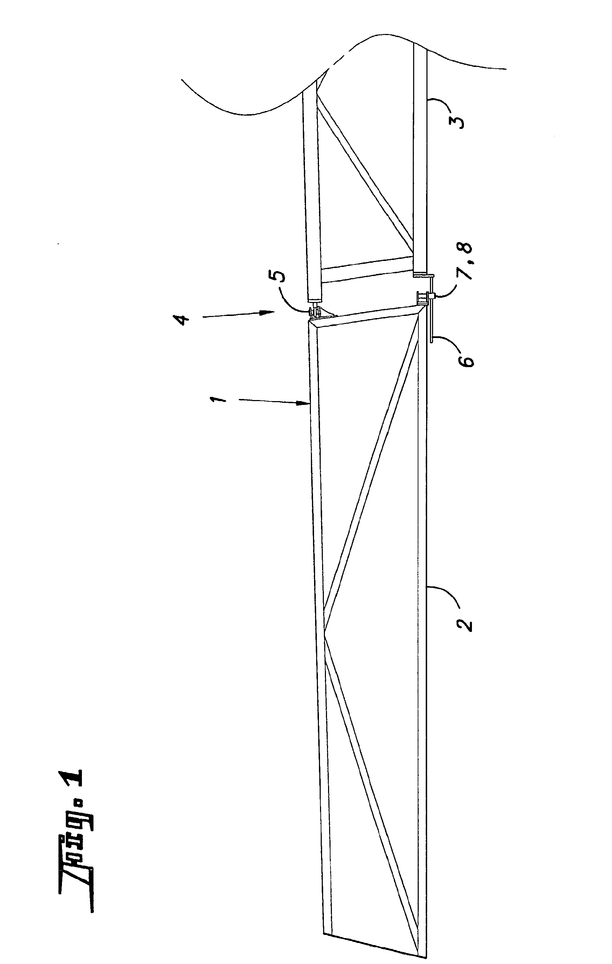

La rampe de pulvérisation (1), partiellement représentée sur la figure 1, comporte un tronçon d'extrémité (2) lié à un deuxième tronçon (3) au moyen d'une articulation (4). D'une manière connue de l'homme de l'art, ladite articulation (4) est réalisée au moyen d'une rotule (5), d'un rail de guidage (6) et de deux ergots (7, 8).

Ledit rail de guidage (6), disposé dans un plan sensiblement horizontal, est lié à une partie basse dudit deuxième tronçon (3). Lesdits ergots (7, 8), d'axe respectif sensiblement vertical, sont liés à une partie basse dudit tronçon d'extrémité (2). Lesdits ergots (7, 8) sont avantageusement disposés de part et d'autre d'un plan vertical médian dudit tronçon d'extrémité (2). Lorsque ladite rampe (1) ne rencontre pas d'obstacle, lesdits ergots (7, 8) viennent en appui contre une gorge respective (9, 10) prévue sur ledit rail de guidage (6). Pour sa part, ladite rotule (5) est liée d'une part à une partie haute dudit tronçon d'extrémité (2) et d'autre part à une partie haute dudit deuxième tronçon (3). Ladite rotule (5) est avantageusement disposée dans ledit plan vertical médian dudit tronçon d'extrémité (2) et dans un plan vertical médian dudit deuxième tronçon (3).

Lors de la rencontre d'un obstacle, ledit tronçon d'extrémité (2) peut s'effacer latéralement en pivotant, par rapport audit deuxième tronçon (3), autour d'un axe passant par ladite rotule (5) et par l'un desdits ergots (7, 8).

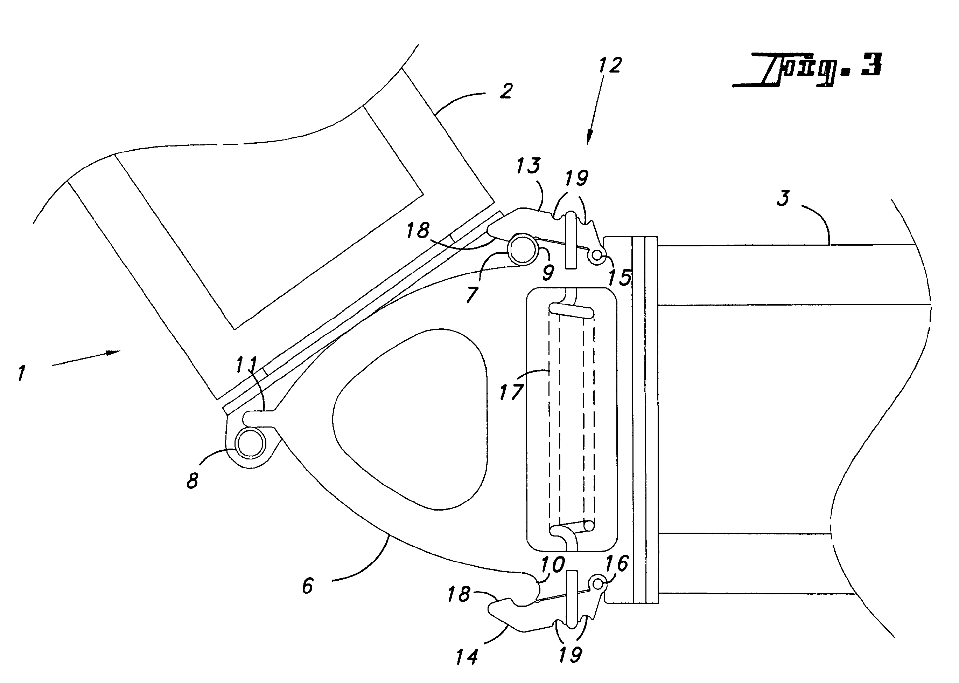

La figure 3 représente une telle situation. L'ergot (7), situé derrière par rapport à un sens d'avance, est resté en contact avec ladite gorge (9). Pour sa part l'ergot (8), situé devant par rapport audit sens d'avance, a coulissé le long dudit rail de guidage (6). Dans l'exemple représenté sur la figure 3, ledit tronçon d'extrémité (2) a donc pivoté autour d'un axe passant par ladite rotule (5) et l'ergot (7). Pour éviter un pivotement trop important dudit tronçon d'extrémité (2) par rapport audit deuxième tronçon (3), ledit rail de guidage (6) comporte également une butée (11). La figure 3 représente un cas extrême où ledit ergot (8) arrive en contact avec ladite butée (11).

D'une manière connue de l'homme de l'art, il est également prévu un dispositif de maintien (12) destiné à conserver ledit tronçon d'extrémité (2) dans sa position initiale. Ledit dispositif de maintien (12) permet avantageusement d'éviter tous pivotements intempestifs dudit tronçon d'extrémité (2) par rapport audit deuxième tronçon (3). Lesdits pivotements intempestifs peuvent notamment être provoqués par des secousses subies par ladite rampe (1) ou par un travail en forte pente. Il va de soi que lors d'une rencontre avec un obstacle, ledit dispositif de maintien (12) permet audit tronçon d'extrémité (2) de s'effacer comme décrit ci-dessus.

Selon une caractéristique importante de la présente invention, ledit dispositif de maintien (12) conserve ledit tronçon d'extrémité (2) dans ladite position initiale tant qu'une force de pivotement n'a pas atteint un certain seuil de déclenchement. Une fois ce seuil dépassé, ledit dispositif de maintien (12) n'exerce aucune force de rappel sur ledit tronçon d'extrémité (2). Le retour en position initiale est donc uniquement dû au poids dudit tronçon d'extrémité (2).

Dans l'exemple de réalisation représenté sur les figures, ledit dispositif de maintien (12) comporte deux mâchoires (13, 14) disposées dans un plan d'extension dudit rail de guidage (6). Une extrémité de chaque mâchoire (13, 14) est liée audit rail de guidage (6) au moyen d'une articulation respective (15, 16) d'axe sensiblement vertical. Une autre extrémité de chaque mâchoire (13, 14) est pourvue d'une forme sensiblement complémentaire à la forme desdits ergots (7, 8). Ledit dispositif de maintien (12) comporte en sus un ressort (17) destiné à fermer lesdites mâchoires (13, 14).

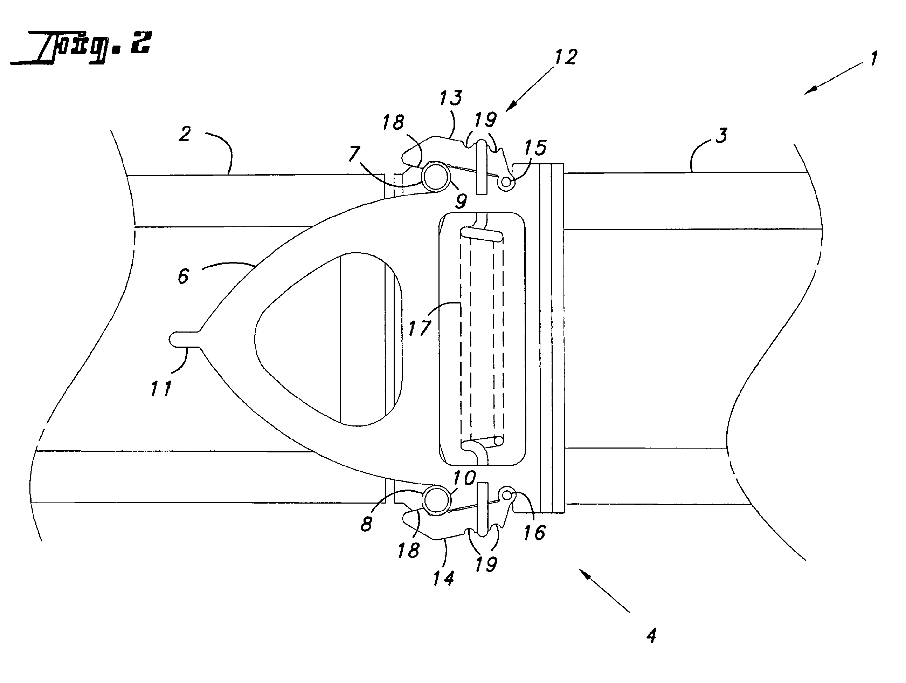

Lorsque ledit tronçon d'extrémité (2) est dans sa position initiale, telle que représentée sur la figure 2, lesdits ergots (7, 8) sont en prise avec lesdites mâchoires (13, 14).

Par contre la force de pivotement, engendrée par la rencontre d'un obstacle, provoque la libération d'au moins un desdits ergots (7, 8) par ouverture de la mâchoire correspondante (13, 14). Cette ouverture de ladite mâchoire (13, 14), obtenue par pivotement de celle-ci autour de ladite articulation respective (15, 16), se fait à l'encontre dudit ressort (17).

A la lumière de la figure 3, lorsqu'un desdits ergots (7, 8) a quitté sa position initiale, ladite mâchoire correspondante (13, 14) est plaquée par ledit ressort (17) contre ledit rail de guidage (6).

Pour faciliter le retour dudit ergots (7, 8) dans sa position initiale, lesdites mâchoires (13, 14) sont avantageusement pourvues d'un biseau respectif (18).

Le seuil de déclenchement dudit dispositif de maintien (12) est avantageusement réglable. A cet effet dans l'exemple de réalisation représenté sur les figures, lesdites mâchoires (13, 14) sont pourvues d'empreintes (19). La position dudit ressort (17) dans lesdites empreintes (19) détermine la force nécessaire pour ouvrir lesdites mâchoires (13, 14). Ledit dispositif de maintien (12) représenté sur les figures permet avantageusement six réglages différents du seuil de déclenchement

La rampe (1) qui vient d'être décrite, n'est qu'un exemple de réalisation et d'utilisation qui ne saurait en aucun cas limiter le domaine de protection défini par les revendications suivantes.

Selon un exemple de réalisation non représenté, lesdites mâchoires (13, 14) sont maintenues fermées à l'aide d'un ressort respectif.

## Revendications

1. Rampe de pulvérisation comportant :
- un tronçon d'extrémité (2) lié à un deuxième tronçon (3) au moyen d'une articulation (4), ladite articulation (4) comportant deux ergots (7, 8),
- un dispositif de maintien (12) destiné à conserver ledit tronçon d'extrémité (2) dans une position initiale tant qu'une force de pivotement n'a pas atteint un certain seuil de déclenchement,
***caractérisée par le fait que*** ledit dispositif de maintien (12) comporte au moins une mâchoire (13, 14), dans la position initiale, un desdits ergots (7, 8) est en prise dans ladite mâchoire (13, 14) et qu'après déclenchement, le retour de ladite rampe (1) dans sa position initiale est dû uniquement au poids dudit tronçon d'extrémité (2).

2. Rampe de pulvérisation selon la revendication 1, ***caractérisée par le fait que*** ladite articulation (4) comporte une rotule (5) et un rail de guidage (6).

3. Rampe de pulvérisation selon la revendication 1, ***caractérisée par le fait que*** ladite mâchoire (13, 14) est maintenue fermée au moyen d'un ressort (17).

4. Rampe de pulvérisation selon l'une des revendications 1 à 3, ***caractérisée par le fait que*** ladite mâchoire (13, 14) est liée à l'une de ses extrémités audit rail de guidage (6) au moyen d'une articulation (15, 16) d'axe au moins sensiblement vertical.

5. Rampe de pulvérisation selon l'une des revendications 1 à 4, ***caractérisée par le fait que*** ladite mâchoire (13, 14) comporte à une extrémité une forme sensiblement complémentaire à la forme desdits ergots (7, 8).

6. Rampe de pulvérisation selon l'une des revendications 1 à 5, ***caractérisée par le fait que*** ladite mâchoire (13, 14) comporte un biseau facilitant le retour dudit ergot (7, 8) dans sa position initiale.

7. Rampe de pulvérisation selon l'une des revendications 1 à 6, ***caractérisée par le fait que*** ledit rail de guidage (6) comporte une butée (11) destinée à empêcher un pivotement excessif dudit tronçon d'extrémité (2) autour de ladite articulation (4).

8. Rampe de pulvérisation selon l'une des revendications 1 à 7, ***caractérisée par le fait que*** ladite mâchoire (13, 14) comporte des empreintes (19), destinées à recevoir ledit ressort (17), permettant de régler le seuil de déclenchement dudit dispositif de maintien (12).

9. Pulvérisateur agricole, ***caractérisé par le fait qu***'il comporte au moins une rampe (1) selon l'une des revendications 1 à 8.

## Claims

1. Spray boom comprising:
- an end section (2) connected to a second section (3) by means of an articulation (4), the said articulation (4) comprising two pins (7, 8),
- a holding device (12) intended to keep the said end section (2) in an initial position as long as a pivoting force has not reached a certain triggering threshold,
***characterized in* that** the said holding device (12) comprises at least one jaw (13, 14), and in the initial position, one of the said pins (7, 8) is engaged in the said jaw (13, 14), and **in that** after triggering, the return of the said boom (1) to its initial position is due solely to the weight of the said end section (2).

2. Spray boom according to Claim 1, ***characterized in* that** the said articulation (4) comprises a ball joint (5) and a guide rail (6).

3. Spray boom according to Claim 1, ***characterized in* that** the said jaw (13, 14) is held closed by a spring (17).

4. Spray boom according to one of Claims 1 to 3, ***characterized in* that** the said jaw (13, 14) is connected at one of its ends to the said guide rail (6) by means of an articulation (15, 16) of at least substantially vertical axis.

5. Spray boom according to one of Claims 1 to 4, ***characterized in* that** the said jaw (13, 14) at one end has a shape that substantially complements the shape of the said pins (7, 8).

6. Spray boom according to one of Claims 1 to 5, ***characterized in* that** the said jaw (13, 14) has a chamfer facilitating the return of the said pin (7, 8) to its initial position.

7. Spray boom according to one of Claims 1 to 6, ***characterized in* that** the said guide rail (6) comprises a stop (11) intended to prevent the said end section (2) from pivoting excessively about the said articulation (4).

8. Spray boom according to one of Claims 1 to 7, ***characterized in* that** the said jaw (13, 14) comprises recesses (19) intended to house the said spring (17), allowing the trigger threshold of the said holding device (12) to be adjusted.

9. Agricultural sprayer, ***characterized in* that** it comprises at least one boom (1) according to one of Claims 1 to 8.

## Patentansprüche

1. Spritzgestänge mit
- einem Endabschnitt (2), der mit einem zweiten Abschnitt (3) mittels eines Gelenks (4) verbunden ist, wobei das Gelenk (4) zwei Haken (7, 8) umfasst,
- einer Haltevorrichtung (12), die dazu bestimmt ist, den Endabschnitt (2) in einer Ausgangsposition zu halten, solange eine Schwenkkraft nicht eine gewisse Auslösungsschwelle erreicht hat,
***dadurch gekennzeichnet,* dass** die Haltevorrichtung (12) mindestens eine Klemmbacke (13, 14) umfasst, dass in der Ausgangsposition einer der Haken (7, 8) mit der Klemmbacke (13, 14) im Eingriff steht, und dass nach der Auslösung die Rückkehr des Gestänges (1) in seine Ausgangsposition nur auf das Gewicht des Endabschnitts (2) zurückgeht.

2. Spritzgestänge nach Anspruch 1, ***dadurch gekennzeichnet,* dass** das Gelenk (4) einen Kugelkopf (5) und eine Führungsschiene (6) umfasst.

3. Spritzgestänge nach Anspruch 1, ***dadurch gekennzeichnet,* dass** die Klemmbacke (13, 14) mittels einer Feder (17) geschlossen gehalten wird.

4. Spritzgestänge nach einem der Ansprüche 1 bis 3, ***dadurch gekennzeichnet,* dass** die Klemmbacke (13, 14) mit einem ihrer Enden mit der Führungsschiene (6) mittels eines Gelenks (15, 16) mit einer im Wesentlichen vertikalen Achse verbunden ist.

5. Spritzgestänge nach einem der Ansprüche 1 bis 4, ***dadurch gekennzeichnet,* dass** die Klemmbacke (13, 14) an einem Ende eine im Wesentlichen zur Form der Haken (7, 8) komplementäre Form aufweist.

6. Spritzgestänge nach einem der Ansprüche 1 bis 5, ***dadurch gekennzeichnet,* dass** die Klemmbacke (13, 14) eine Abschrägung umfasst, die die Rückkehr des Hakens (7, 8) in seine Ausgangsposition erleichtert.

7. Spritzgestänge nach einem der Ansprüche 1 bis 6, ***dadurch gekennzeichnet,* dass** die Führungsschiene (6) einen Anschlag (11) umfasst, der dazu bestimmt ist, ein zu starkes Schwenken des Endabschnitts (2) um das Gelenk (4) zu verhindern.

8. Spritzgestänge nach einem der Ansprüche 1 bis 7, ***dadurch gekennzeichnet,* dass** die Klemmbacke (13, 14) Vertiefungen (19) umfasst, die dazu bestimmt sind, die Feder (17) aufzunehmen und die Einstellung der Auslösungsschwelle der Haltevorrichtung (12) zu ermöglichen.

9. Landwirtschaftliche Feldspritze, ***dadurch gekennzeichnet,* dass** sie mindestens ein Gestänge (1) nach einem der Ansprüche 1 bis 8 umfasst.
